# EUROPEAN PATENT APPLICATION

(11) **EP 4 660 145 A1**
(43) Date of publication of application: **10.12.2025**
(21) Application number: 24750061.4
(22) Date of filing: 24.01.2024
(51) Int. Cl.: C01G 23/00, C08K 3/22, C08L 101/00

(54) **SPHERICAL STRONTIUM TITANATE-BASED FINE PARTICLE POWDER, DISPERSION, AND RESIN COMPOSITION**

(30) Priority: 30.01.2023 JP 2023011995
(71) Applicant: Toda Kogyo Corp., Hiroshima-shi, Hiroshima 732-0828 (JP)
(72) Inventor: KAWAGUCHI Takamoto, Otake-shi, Hiroshima 739-0652 (JP); TAMARI Kousaku, Otake-shi, Hiroshima 739-0652 (JP); UEMOTO Shinji, Otake-shi, Hiroshima 739-0652 (JP); MITANI Yoshifumi, Otake-shi, Hiroshima 739-0652 (JP); KAWAI Yoshiki, Otake-shi, Hiroshima 739-0652 (JP); ZHANG Anyu, Otake-shi, Hiroshima 739-0652 (JP)
(74) Representative: Schiweck Weinzierl Koch Patentanwälte Partnerschaft mbB
(86) International application number: PCT/JP2024/001930
(87) International publication number: WO 2024/162110

(57) **Abstract**

A spherical strontium titanate-based fine particle powder characterized in that it is spherical, has an average primary particle size of less than 50 nm, and has an A/B ratio of the particle of 0.80 or more and 0.95 or less has high dispersion stability in resins and solvents and can provide a composite film in which particles are uniformly distributed, since the composition of the powder is appropriately controlled.

## Description

### TECHNICAL FIELD

An object of the present invention is to obtain a spherical strontium titanate-based fine particle powder that is optimal as a filler.

### BACKGROUND ART

In recent years, with the trend toward smaller, higher-performance, and lighter various electronic devices, there has been an increasing need for organic-inorganic hybrid materials that have the functionality of inorganic fillers (refractive index, dielectric constant, electrical conductivity, magnetism, thermal conductivity, etc.) while maintaining the processability of organic resins.

For example, brightness enhancement films used in displays and diffractive optical elements used in AR/MR glasses, etc. require a high refractive index that cannot be achieved by resin alone in order to obtain characteristics such as high brightness, thin film, improved viewing angle, etc. Therefore, adding inorganic fillers with a high refractive index to resins to improve the refractive index of resin films has been investigated.

In addition, with the trend toward lighter, thinner, smaller, and more functional electronic components, there has been active development of replacing insulating films of thin film transistors (TFTs) and the like from inorganic materials such as silicon nitride to resin compositions composed of resins that are easy to form patterns and highly dielectric inorganic fillers.

On the other hand, strontium titanate is a compound with a perovskite structure, and is a highly functional material, so it is used in a variety of applications. It is used, for example, in pigments that utilize its high refractive index, optical applications such as reflectors and light collectors, ceramic capacitor applications due to its high dielectric constant, further visible light photocatalysts that utilize its photocatalytic activity, and in semiconductors that utilize its semiconductivity obtained by adding other elements, in semiconductor capacitors, thermoelectric materials, EL, light-emitting materials, and the like.

Therefore, it is expected that by forming a composite of highly functional strontium titanate and resin, it will be possible to create a new material with functionality that cannot be achieved with resin alone.

The filler in such hybrid materials is required to have high transparency and uniform dispersibility, and for transparency, it is best that the filler is spherical and fine, and for uniform dispersibility, it is best that the filler to have high dispersion stability in the hydrophobic resin or solvent.

However, a compound having a perovskite structure represented by ABO₃ generally has an alkali metal or alkaline earth metal present in the A site, and its particle surface shows alkalinity, so that it is highly hydrophilic, and the inorganic filler is likely to aggregate in hydrophobic resins and solvents. In particular, the surface area increases as the compound becomes finer more suitable for the filler, making it even more difficult to obtain dispersion stability.

There have conventionally been various reports on strontium titanate fine particles (Patent Literatures 1 to 3).

### CITATION LIST

### PATENT LITERATURE

[Patent Literature 1] Japanese Laid-Open Patent Publication No. 2015-137208
[Patent Literature 2] Japanese Laid-Open Patent Publication No. 2019-151507
[Patent Literature 3] Japanese Laid-Open Patent Publication No. 2016-69211

### SUMMARY OF INVENTION

### TECHNICAL PROBLEM

However, although there is currently a great demand for a strontium titanate-based fine particle powder suitable for a filler as described above, it has not yet been obtained.

That is, the above-mentioned Patent Literature 1 describes the production of fine particles of strontium titanate by reacting a hydrolysis product of a titanium compound with a water-soluble strontium salt in a strong alkaline aqueous solution. However, the resulting particles are rectangular or cubic in shape and therefore unsuitable as a filler.

Furthermore, the aforementioned Patent Literatures 2 and 3 disclose a method for obtaining spherical strontium titanate by reacting a hydrolysis product of a titanium compound and a water-soluble strontium salt, with a hydroxycarboxylic acid or a third component added, in a strong alkaline aqueous solution, however, since components other than strontium titanate are present in this system, it is not suitable as a filler.

Therefore, an object of the present invention is to provide a fine spherical strontium titanate-based fine particle powder suitable for use as a filler in composite materials, and a dispersion having dispersion stability.

### SOLUTION TO PROBLEM

The above object can be achieved by the present invention as follows.

That is, the present invention relates to a spherical strontium titanate-based fine particle powder characterized in that it is composed of a perovskite-type compound represented by ABO₃, has an average primary particle size of less than 50 nm, and has an A/B ratio of the particle of 0.80 or more and 0.95 or less (Invention 1).

The present invention also relates to a dispersion containing the spherical strontium titanate-based fine particle powder according to Invention 1 (Invention 2).

The present invention also relates to a resin composition containing the spherical strontium titanate-based fine particle powder according to Invention 1 (Invention 3).

### ADVANTAGEOUS EFFECTS OF INVENTION

The spherical strontium titanate-based fine particle powder according to the present invention is a fine particle, and therefore the resin composition containing it is transparent. In addition, the spherical strontium titanate-based fine particle powder according to the present invention has high dispersion stability in resins and dispersion solvents, and the filler can be uniformly dispersed in the resin, and the bias in the properties of the composite film can be reduced, since surplus alkaline components on the surface have been removed. Further, since the spherical strontium titanate-based fine particle powder according to the present invention is spherical, the filling property can be improved, and it is suitable as a filler for organic-inorganic hybrid materials. That is, the spherical strontium titanate-based fine particle powder and dispersion according to the present invention can be processed and developed for various applications, and the resin composition containing the fine particle powder can form a functional resin composition.

### DESCRIPTION OF EMBODIMENTS

The configuration of the present invention will be described in detail as follows.

The strontium titanate-based fine particle powder according to the present invention is a spherical strontium titanate-based fine particle powder which is composed of a perovskite-type compound represented by ABO₃, has an average primary particle size of less than 50 nm, and has an A/B ratio of the particle of 0.80 or more and 0.95 or less.

The strontium titanate-based fine particle powder according to the present invention is spherical and has an average primary particle size of less than 50 nm. By controlling the spherical shape and the average primary particle size within the above range, the amount of the filler to be filled can be increased while maintaining the resin properties such as transparency. Furthermore, when the particle size is sufficiently smaller than the wavelength in the visible region, the light scattering intensity is significantly reduced and the transparency is increased. The preferred average primary particle size is 40 nm or less, more preferably 25 nm or less. The lower limit is about 8 nm.

The spherical strontium titanate-based fine particle powder according to the present invention is spherical. If the filler is spherical, it is preferable because the filling rate can be increased when making a composite with a resin or the like. The circularity is preferably 0.80 or more. If the circularity of the strontium titanate-based fine particle powder is less than 0.80, the shape may be a rectangular parallelepiped, and the filling density may decrease. The circularity is more preferably 0.82 or more, and even more preferably 0.83 to 1.0. The circularity is evaluated by the method described below.

The spherical strontium titanate-based fine particle powder according to the present invention is composed of a perovskite-type compound represented by ABO₃, and examples thereof include strontium titanate and barium strontium titanate. At least Sr is present in the A site, and some of the constituent elements can be substituted with an alkali metal or an alkaline earth metal. The substituted element is not particularly limited, but alkaline earth metals such as Ca and Ba are preferred. At least Ti is present in the B site, and some of the constituent elements may be substituted with a transition metal element such as Zr.

The composition of the spherical strontium titanate-based fine particle powder according to the present invention is evaluated by fluorescent X-rays. The molar ratio of A-site elements to B-site elements, represented by A/B, is 0.80 or more and 0.95 or less. If A/B is lower than 0.80, the particle surface has excess hydroxyl groups, which is considered to be in a highly hydrophilic state, and there is a risk of the particles agglomerating together in a resin or solvent. This may cause a part or all of the fluid dispersion to solidify or gel, which may result in failure to obtain dispersion stability. If A/B is higher than 0.95, there is a large amount of alkaline components on the particle surface, which may cause a decrease in dispersion stability in the dispersion medium or resin. A more preferable A/B ratio is 0.82 or more and 0.94 or less, and even more preferably 0.83 or more and 0.93 or less.

The powder pH of the spherical strontium titanate-based fine particle powder according to the present invention is preferably near neutral. If the powder pH is neutral, the polarity of the particle surface is low, and the compatibility with resins and solvents is high. The powder pH is preferably 6.0 to 9.0, more preferably 6.3 to 8.8, and even more preferably 6.5 to 8.5.

In the spherical strontium titanate fine particle powder according to the present invention, by setting A/B at 0.80 or more and 0.95 or less, the powder pH can be made close to neutral, and the excess alkaline components in the A site on the particle surface can be removed. In other words, it is presumed that because there is little excess component on the surface of the fine particle, the polarity of the particle surface is low, and dispersion stability in a dispersion medium containing an organic solvent can be obtained. The excess alkaline components react with CO₂ in the air to produce carbonates. Therefore, the amount of carbonate compounds contained in the particles indicates the amount of excess alkaline components in the A site. The amount of carbonate compounds contained in the spherical strontium titanate-based fine particle powder according to the present invention is preferably 1% by weight or less, more preferably 0.5% by weight or less, and even more preferably 0.3% by weight or less. The lower limit is about 0% by weight.

Next, a method for producing the spherical strontium titanate-based fine particle powder according to the present invention will be described.

The spherical strontium titanate-based fine particle powder according to the present invention can be obtained by neutralizing a titanium raw material with an alkaline aqueous solution to obtain a hydrous titanium hydroxide slurry (neutralization reaction), washing the hydrous titanium hydroxide slurry with water, heating it, adding it to a strontium hydroxide-based aqueous solution, and carrying out a wet reaction in the temperature range of 100 to 300°C.

The titanium raw material may be titanium tetrachloride, etc. The alkali raw material may be strontium hydroxide, barium hydroxide, sodium hydroxide, etc.

The addition ratio (Sr/Ti or Ba/Ti) of the titanium raw material to the alkaline aqueous solution during the neutralization reaction is preferably 1.1 to 1.8 in molar ratio. If the addition ratio is less than 1.1, the production yield of the strontium titanate core particles decreases, and if it exceeds 1.8, the distribution of primary particles of the strontium titanate-based fine particle powder deteriorates. A more preferred addition ratio is 1.25 to 1.65. When sodium hydroxide is used as the alkaline aqueous solution, the molar ratio range of twice as much as mentioned above is preferred.

After the neutralization reaction, the mixture is washed with water and an aqueous strontium hydroxide solution is added. The amount of the aqueous strontium hydroxide solution added is preferably such that the molar ratio of Sr/Ti is 1.5 to 3.0 with respect to Ti in the reaction solution. The strontium hydroxide-based aqueous solution includes an aqueous strontium hydroxide solution, and the composition can be partially substituted by further adding barium hydroxide, zirconium oxychloride, or the like.

The reaction is preferably carried out in a nitrogen atmosphere so as to prevent the strontium compound from reacting with carbon dioxide gas, etc. in the air.

The reaction concentration of the reaction solution for generating strontium titanate-based fine particles is preferably 0.05 to 0.7 mol/L in terms of the titanium compound. If the reaction concentration is less than 0.05 mol/L, the yield is low and not industrially viable. If the reaction concentration exceeds 0.7 mol/L, the amount of strontium hydroxide in the reaction solution exceeds the solubility, causing Sr(OH)₂ to precipitate, making it difficult to carry out a uniform liquid phase reaction.

Examples of the wet reaction include a normal pressure reaction, a pressurized reaction, and a hydrothermal synthesis, under wet conditions, and one or more reaction steps may be combined. The reaction temperature of the wet reaction is preferably 100 to 300°C. If the reaction temperature is less than 100°C, it is difficult to obtain a dense spherical strontium titanate-based fine particle powder. If the reaction temperature exceeds 300°C, it is difficult to design a hydrothermal vessel. The reaction temperature is more preferably 105 to 280°C.

It is preferable to add a pH adjuster to the slurry containing the particles after the wet reaction, and after adjusting the pH to near neutral, preferably to pH 5 to 8, the slurry is washed with water and dried in a conventional manner. There are no particular limitations on the pH adjuster as long as it adjusts the pH of the slurry to the above range, and examples of the pH adjuster include acetic acid. By adjusting the slurry pH and washing with water, the excess carbonate compound on the particle surface can be washed away, and the powder pH can be made near neutral. In addition, impurities such as Na, K, and Cl can also be removed at the same time.

In the present invention, calcination treatment, pulverization treatment, deagglomeration treatment, dispersion treatment, and surface treatment may also be carried out.

Next, a dispersion containing the spherical strontium titanate fine particle powder according to the present invention will be described.

As the dispersion medium according to the present invention, either a water-based or a solvent-based medium can be used.

As the dispersion medium for the water-based dispersion, water, or alcohol-based solvents such as methyl alcohol, ethyl alcohol, propyl alcohol, isopropyl alcohol, and butyl alcohol; glycol ether-based solvents such as methyl cellosolve, ethyl cellosolve, propyl cellosolve, and butyl cellosolve; oxyethylene or oxypropylene addition polymers such as diethylene glycol, triethylene glycol, polyethylene glycol, dipropylene glycol, tripropylene glycol, and polypropylene glycol; alkylene glycols such as ethylene glycol, propylene glycol, and 1,2,6-hexanetriol; and water-soluble organic solvents such as glycerin and 2-pyrrolidone can be used. These dispersion media for the water-based dispersion can be used alone or in combination of two or more depending on the intended use.

As the dispersion medium for the solvent-based dispersion, aromatic hydrocarbons such as toluene and xylene; ketones such as methyl ethyl ketone and cyclohexanone; amides such as N,N-dimethylformamide, N,N-dimethylacetamide and N-methylpyrrolidone; ether alcohols such as ethylene glycol monomethyl ether, ethylene glycol monoethyl ether, diethylene glycol monomethyl ether, propylene glycol monomethyl ether and propylene glycol monoethyl ether; ether acetates such as ethylene glycol monomethyl ether acetate, ethylene glycol monoethyl ether acetate, propylene glycol monomethyl ether acetate and propylene glycol monoethyl ether acetate; acetate esters such as ethyl acetate, butyl acetate and isobutyl acetate; lactate esters such as methyl lactate, ethyl lactate and propyl lactate; cyclic esters such as ethylene carbonate, propylene carbonate and γ-butyrolactone, and various monomers, etc. can be used. These dispersion media for the solvent-based dispersion can be used alone or in a mixture of two or more depending on the intended use.

The concentration of the spherical strontium titanate-based fine particle powder in the dispersion according to the present invention is preferably 5 to 60% by weight. If the concentration of the spherical strontium titanate-based fine particle powder in the dispersion is less than 5% by weight, the productivity for use in the next step is low, and if it exceeds 60% by weight, it is difficult to say that a slurry with high fluidity is produced. The concentration of the spherical strontium titanate-based fine particle powder in the dispersion is more preferably 10 to 55% by weight, and even more preferably 15 to 50% by weight.

The dispersion according to the present invention may also contain dispersants, additives (resins, defoaming agents, assistants, etc.) and the like added as necessary, and the means for this is not limited as long as the dispersants and additives are allowed to adhere to, cover or react with the whole or part of the surface of the fine particles, and examples thereof include a bead mill, etc. The dispersants in the present invention may be appropriately selected and used according to the type of the spherical strontium titanate fine particle powder and the dispersion medium used, and organic silicon compounds such as alkoxysilane, silane coupling agent and organopolysiloxane, organic titanium compounds such as titanate coupling agent, organic aluminum compounds such as aluminate coupling agent, organic zirconium compounds such as zirconate coupling agent, surfactants or polymer dispersants, and the like can be used, and these can be used by mixing one or more kinds.

Examples of the organic silicon compound include alkoxysilanes such as methyltrimethoxysilane, methyltriethoxysilane, dimethyldiethoxysilane, phenyltriethoxysilane, ethyltriethoxysilane, propyltriethoxysilane, butyltriethoxysilane, hexyltriethoxysilane, octyltriethoxysilane, tetraethoxysilane, and tetramethoxysilane; silane-based coupling agents such as vinyltrimethoxysilane, vinyltriethoxysilane, γ-aminopropyltriethoxysilane, γ-glycidoxypropyltrimethoxysilane, γ-mercaptopropyltrimethoxysilane, γ-methacryloyloxypropyltrimethoxysilane, N-(β-aminoethyl)-γ-aminopropyltrimethoxysilane, γ-glycidoxypropylmethyldimethoxysilane, and γ-chloropropyltrimethoxysilane; and organopolysiloxanes such as polysiloxane, methylhydrogenpolysiloxane, and modified polysiloxane.

Examples of the organic titanium compound include isopropyl triisostearoyl titanate, isopropyl tris(dioctyl pyrophosphate) titanate, bis(dioctyl pyrophosphate)oxyacetate titanate, isopropyl tri(N-aminoethyl aminoethyl) titanate, tris(dioctyl pyrophosphate)ethylene titanate, isopropyl dioctyl pyrophosphate titanate, isopropyl tris(dodecylbenzenesulfonyl) titanate, titanium tetra-n-butoxide, titanium tetra-2-ethylhexoxide, tetraisopropyl bis(dioctyl phosphite)titanate, tetraoctyl bis(ditridecyl phosphite)titanate, tetra(2,2-diallyloxymethyl-1-butyl)bis(ditridecyl)phosphite titanate, tetraoctyl bis(ditridecyl phosphate)titanate, tetra(2-2-diallyloxymethyl-1-butyl)bis(ditridecyl)phosphate titanate, bis(dioctyl pyrophosphate)oxyacetate titanate, bis(dioctyl pyrophosphate)ethylene titanate, and the like.

Examples of the organic aluminum compound include acetoalkoxyaluminum diisopropylate, aluminum diisopropoxymonoethylacetoacetate, aluminum trisethylacetoacetate, aluminum trisacetylacetonate, and the like.

Examples of the organic zirconium compound include zirconium tetrakis acetylacetonate, zirconium dibutoxy bis acetylacetonate, zirconium tetrakis ethyl acetoacetate, zirconium tributoxy monoethyl acetoacetate, zirconium tributoxy acetylacetonate, and the like.

Examples of the above surfactants include anionic surfactants such as fatty acid salts, sulfate esters salts, sulfonate salts, and phosphate esters salts; nonionic surfactants such as polyethylene glycol-type nonionic surfactants such as polyoxyethylene alkyl ethers and polyoxyethylene aryl ethers, and polyhydric alcohol-type nonionic surfactants such as sorbitan fatty acid esters; cationic surfactants such as amine salt-type cationic surfactants and quaternary ammonium salt-type cationic surfactants; and amphoteric surfactants such as alkyl betaines such as alkyl dimethylaminoacetate betaines, and alkyl imidazolines.

As the polymer dispersant, a styrene-acrylic acid copolymer, a styrene-maleic acid copolymer, a polycarboxylic acid and a salt thereof, etc. can be used.

The amount of the dispersant added depends on the total surface area of the spherical strontium titanate-based fine particle powder in the dispersion, and may be appropriately adjusted according to the purpose of the dispersion of the spherical strontium titanate-based fine particle powder and the type of the dispersant. In general, by adding 0.01 to 100% by weight of the dispersant to the spherical strontium titanate-based fine particle powder in the dispersion medium, the spherical strontium titanate-based fine particle powder can be uniformly and finely dispersed in the dispersion medium, and the dispersion stability can also be improved. In addition to adding the dispersant directly to the dispersion medium, the spherical strontium titanate-based fine particle powder may be previously treated with the dispersant.

Next, a resin composition containing the spherical strontium titanate-based fine particle powder according to the present invention will be described.

The resin to be used is not particularly limited, but acrylic resin, polycarbonate, polystyrene resin, polyester resin, polyimide resin, polymethyl methacrylate (PMMA), AS resin, silicone resin, fluorine resin, etc. can be used.

The viscosity of a dispersion or a resin composition containing the spherical strontium titanate-based fine particle powder according to the present invention may be such that it can maintain fluidity without causing any settling, separation, solidification or gelation.

### EXAMPLES

Examples of the present invention will be described below, but the present invention is not limited to these.

The average primary particle size was measured from approximately 300 primary particles in a photograph (25,000 × magnification) of the spherical strontium titanate-based fine particle powder taken with a transmission electron microscope (JEM-F200, manufactured by JEOL Ltd.). Here, the average primary particle size is the particle size calculated by averaging the diameter of a circle having the same area as that determined from the photograph for each particle for all particles measured. The particle shape was determined from the electron microscope photograph. Furthermore, the circularity was expressed as (4π × area)/perimeter² of the particle measured from the electron microscope photograph.

The Sr/Ti molar ratio represented by A/B was measured using an X-ray fluorescence analyzer (ZSX Primus II manufactured by Rigaku Holdings Corporation).

The amount of carbonate compounds contained in the spherical strontium titanate-based fine particle powder was measured using an X-ray diffractometer D8-ADVANCE (manufactured by Bruker Japan Co., Ltd.) (bulb: Cu). Measurements were performed in the 2θ range of 10 to 90°, and the amount was calculated using the Rietveld method.

The powder pH of the spherical strontium titanate-based fine particle powder was evaluated by the following method. Two point five grams (2.5 g) of the fine particle powder was added to 50 ml of pure water and boiled for 10 minutes, then cooled to room temperature and filtered, and the pH of the filtrate was measured.

The dispersion stability of the spherical strontium titanate-based fine particle powder was evaluated by the following method. Five grams (5 g) of the fine particle powder, 5 g of propylene glycol monomethyl ether acetate (PGMEA), and 0.5 g of a polymer dispersant (Disperbyk-180, manufactured by BYK Japan KK) were mixed and dispersed for 60 minutes using a paint shaker. The dispersion was left to stand at room temperature, and those that were not gelled and had fluidity after 10 days or more were rated as ∘, and those that gelled in less than 10 days were rated as ×.

The coating transparency of the dispersion containing spherical strontium titanate-based fine particle powder was evaluated by the following method. One gram (1 g) of the spherical strontium titanate-based fine particle powder, 9 g of propylene glycol monomethyl ether acetate (PGMEA), and 0.1 g of a polymer dispersant (Disperbyk-180, manufactured by BYK Japan KK) were dispersed for 60 minutes using a paint shaker to obtain a dispersion. This dispersion was coated on a PET film to a thickness of 12 µm using a bar coater. Each coating was visually observed, and those with transparency and no white turbidity were rated as ∘, and those with white turbidity were rated as ×.

### Example 1

A 20 wt% strontium hydroxide aqueous solution was added to a titanium tetrachloride aqueous solution with a Ti molar concentration of 2.10 mol/l so that the Sr/Ti molar ratio was 1.37 to obtain a titanium hydroxide slurry, which was then washed with water. The obtained titanium hydroxide slurry was poured into a strontium hydroxide aqueous solution. The strontium hydroxide aqueous solution at this time had a Sr/Ti molar ratio of 2.0. The concentration during the reaction was 0.28 mol/l as the strontium titanate concentration. Thereafter, the mixture was stirred at 180°C for 8 hours to perform a hydrothermal reaction. After the hydrothermal reaction, the slurry was cooled to room temperature, and acetic acid was added to adjust the pH to 5.0, followed by washing with water using a Nutsche filter, filtration, and drying to obtain a white powder of spherical strontium titanate fine particles.

Observation of the resulting strontium titanate fine particle powder with an electron microscope revealed spherical particles with an average primary particle size of 17.4 nm. Fluorescent X-ray measurement revealed that A/B (Sr/Ti) was 0.835 and the powder pH was 8.3.

### Example 2

A spherical strontium titanate fine particle powder was obtained in the same manner as in Example 1, except that the pH of the slurry after the hydrothermal reaction was adjusted to 6.0.

Observation of the resulting strontium titanate fine particle powder with an electron microscope revealed spherical particles with an average primary particle size of 17.4 nm. Fluorescent X-ray measurement revealed that the Sr/Ti ratio was 0.883. The powder pH was 8.2.

### Example 3

A spherical strontium titanate fine particle powder was obtained in the same manner as in Example 1, except that the hydrothermal reaction temperature was 260°C.

Observation of the resulting strontium titanate fine particle powder with an electron microscope revealed spherical particles with an average primary particle size of 22.1 nm. Fluorescent X-ray measurement revealed that the Sr/Ti ratio was 0.866 and the powder pH was 8.5.

### Example 4

A spherical strontium titanate fine particle powder was obtained in the same manner as in Example 3, except that the pH of the slurry after the hydrothermal reaction was adjusted to 6.0.

Observation of the resulting strontium titanate fine particle powder with an electron microscope revealed spherical particles with an average primary particle size of 22.1 nm. Fluorescent X-ray measurement revealed that the Sr/Ti ratio was 0.879 and the powder pH was 8.1.

### Example 5

A spherical strontium titanate fine particle powder was obtained in the same manner as in Example 3, except that the pH of the slurry after the hydrothermal reaction was adjusted to 7.0.

Observation of the resulting strontium titanate fine particle powder with an electron microscope revealed spherical particles with an average primary particle size of 22.1 nm. Fluorescent X-ray measurement revealed that the Sr/Ti ratio was 0.929 and the powder pH was 8.9.

### Comparative Example 1

A strontium titanate fine particle powder was obtained in the same manner as in Example 1, except that the pH of the slurry after the hydrothermal reaction was not adjusted and the slurry was washed with water and dried.

Observation of the resulting strontium titanate fine particle powder with an electron microscope revealed spherical particles with an average primary particle size of 17.4 nm. Fluorescent X-ray measurement revealed that the Sr/Ti ratio was 0.980 and the powder pH was 10.4.

### Comparative Example 2

A strontium titanate fine particle powder was obtained in the same manner as in Example 3, except that the pH of the slurry after the reaction was not adjusted and it was washed with water and dried.

Observation of the resulting strontium titanate fine particle powder with an electron microscope revealed spherical particles with an average primary particle size of 22.1 nm. Fluorescent X-ray measurement revealed that the Sr/Ti ratio was 0.978 and the powder pH was 10.8.

### Comparative Example 3

A strontium titanate fine particle powder was obtained in the same manner as in Example 2, except that the reaction temperature was 90°C and the reaction time was 3 hours.

Observation of the resulting strontium titanate fine particle powder with an electron microscope showed spherical particles with an average primary particle size of 12.5 nm. Fluorescent X-ray measurement revealed that the Sr/Ti ratio was 0.747 and the powder pH was 8.6. Comparative Example 3 had a small amount of carbonate compounds (residual SrCO₃) and a low powder pH, but the A/B ratio was also low, so the dispersion stability was evaluated as "×".

The properties, dispersion stability, and coating transparency of the spherical strontium titanate fine particle powders obtained in each Example and Comparative Example are shown in Table 1. All of the dispersions in the Examples showed dispersion stability for 10 days or more, but the dispersions in the Comparative Examples gelled in less than 10 days, indicating that the dispersion stability was low.

**Table 1**

| | average primary particle size | A/B | powder pH | circularity | residual SrCO₃ | dispersion stability | coating transparency |
|---|---|---|---|---|---|---|---|
| | [nm] | [mol ratio] | [-] | [-] | [wt %] | [-] | [-] |
| Example 1 | 17.4 | 0.835 | 8.3 | 0.86 | 0.00 | ○ | ○ |
| Example 2 | 17.4 | 0.883 | 8.2 | 0.86 | 0.00 | ○ | ○ |
| Example 3 | 22.1 | 0.866 | 8.5 | 0.85 | 0.00 | ○ | ○ |
| Example 4 | 22.1 | 0.879 | 8.1 | 0.85 | 0.00 | ○ | ○ |
| Example 5 | 22.1 | 0.929 | 8.9 | 0.85 | 0.00 | ○ | ○ |
| Comparative Example 1 | 17.4 | 0.980 | 10.4 | 0.86 | 1.86 | × | ○ |
| Comparative Example 2 | 22.1 | 0.978 | 10.8 | 0.85 | 1.39 | × | ○ |
| Comparative Example 3 | 12.5 | 0.747 | 8.6 | 0.89 | 0.00 | × | ○ |

The spherical strontium titanate fine particle powders obtained in the examples have a powder pH close to neutral, and residual SrCO₃ has been removed. Therefore, it is presumed that the dispersion containing the spherical strontium titanate-based fine particle powder according to the present invention was able to maintain the stable dispersion state for a longer period of time than the fine particles obtained in the comparative examples. Therefore, the spherical strontium titanate-based fine particle powder according to the present invention is transparent because it is fine, and has a neutral powder pH and dispersion stability because A/B is 0.80 or more and 0.95 or less. Therefore, even when mixed with a solvent or resin as a filler, agglomeration is suppressed, and uniform composite films, especially thin films, can be produced.

### INDUSTRIAL APPLICABILITY

The spherical strontium titanate-based fine particle powder of the present invention is characterized by its average particle size being controllable according to the purpose, being fine and spherical, and having appropriately controlled A/B, thus being transparent and having high dispersion stability. Therefore, the spherical strontium titanate-based fine particle powder of the present invention is optimal for a high refractive index inorganic filler for increasing the refractive index of a resin composition in a brightness improvement film used in a display, a diffractive optical element used in an AR/MR glass, etc., or a high dielectric inorganic filler for a high dielectric resin composition usable in an electronic component such as a thin film transistor (TFT).

## Claims

1. A spherical strontium titanate-based fine particle powder which is composed of a perovskite-type compound represented by ABO₃, has an average primary particle size of less than 50 nm, and has an A/B ratio of the particle of 0.80 or more and 0.95 or less.

2. A dispersion comprising the spherical strontium titanate-based fine particle powder according to claim 1.

3. A resin composition comprising the spherical strontium titanate-based fine particle powder according to claim 1.
